# EUROPÄISCHE PATENTSCHRIFT

(11) **EP 3 608 246 B1**
(45) Veröffentlichungstag und Bekanntmachung des Hinweises auf die Patenterteilung: **12.05.2021**
(21) Anmeldenummer: 18188011.3
(22) Anmeldetag: 08.08.2018
(51) Int. Cl.: B65D 19/44, F16B 21/02

(54) **VORRICHTUNG ZUR HALTERUNG VON GEGENSTÄNDEN**
DEVICE FOR MOUNTING OBJECTS
DISPOSITIF DE FIXATION D'OBJETS

(43) Veröffentlichungstag der Anmeldung: 12.02.2020
(73) Patentinhaber: ALWA GmbH & Co. KG Konstruktion & Formenbau, 78652 Deißlingen (DE)
(72) Erfinder: SCHWARTZ, Hans, 88447 Warthausen (DE)
(74) Vertreter: Engelhardt, Volker

(56) Entgegenhaltungen:
- EP-A1- 2 860 126
- EP-A1- 2 860 127
- US-A- 2 940 558
- US-A- 3 180 606

## Beschreibung

Die Erfindung bezieht sich auf eine Vorrichtung zur Halterung von Gegenständen nach dem Oberbegriff des Patentanspruchs 1.

Aus der EP 3 330 196 A1 ist eine solche Vorrichtung zur Aufnahme von Gegenständen zu entnehmen. Bei diesen Gegenständen handelt es sich üblicherweise um hochwertige Bauteile, die während eines Transportes oder Waschvorganges sicher in dem Haltekörper eingesetzt sind, so dass die Gegenstände nicht aneinander schlagen und somit nicht beschädigt werden. Der Haltekörper weist einen Arretiersockel auf, der in ein Drahtgestell mit einer Vielzahl von rechteckförmigen Aufnahmeöffnungen einsteckbar und bereichsweise verdrehbar ist.

Da das Drahtgestell aus zwei Ebenen gebildet ist, die durch parallel verlaufende Drähte entstehen, liegen zwei unterschiedliche Höhenniveaus vor. Folglich können die parallel zueinander verlaufenden Paare von Drahtsträngen zur Arretierung des Haltekörpers bzw. dessen Arretierungsockels verwendet werden. In dem Arretierungssockel sind demnach zwei unterschiedliche Aufnahmeöffnungen vorgesehen, die jeweils mit einem der beiden Paare von Drähten, die in einer gemeinsamen Ebene verlaufen, derart zusammenwirken, dass der Arretiersockel durch Verdrehen mit den jeweiligen Paaren von Drähten in einer kraftschlüssigen Wirkverbindung steht. Durch die manuell aufzubringende Vertikalkraft kann der Haltekörper sowohl von dem Drahtgestell gelöst als auch mit diesem fest verbunden sein.

Diese Vorrichtungen haben sich zwar in der Praxis bewährt, sind jedoch ausschließlich zur Abstützung von Gegenständen geeignet, die in Richtung der wirkenden Schwerkraft abzustützen sind. Sobald nämlich die Gegenstände senkrecht zu der Schwerkraftrichtung ausgerichtet sind, entstehen an dem Arretiersockel Schwerkräfte und Drehmomente, die dazu führen, dass bei entsprechender Eigengewichtskraft der eingelagerten Gegenstände der Arretiersockel beschädigt oder zerstört ist.

Der Erfindung liegt die Aufgabe zugrunde, eine Vorrichtung der eingangs genannten Gattung derart auszugestalten, dass zum einen die abzustützenden Gegenstände in einer zu der Schwerkraftrichtung geneigten Position gelagert werden können, ohne dass der Arretiersockel des Haltekörpers bricht, und dass zum anderen der Haltekörper schnell und kraftsparend in das Traggestell der Vorrichtung einsteckbar und arretierbar ist bzw. von dieser wieder gelöst werden kann.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass unmittelbar benachbart zu dem Boden ein kreisförmiger Stützabschnitt als Bestandteile des Arretiersockels vorgesehen ist, der im montierten Zustand des Haltekörpers an dem Traggestell an zwei gegenüberliegenden Langseiten der Aufnahmeöffnung anliegt, dass unmittelbar benachbart zu dem Stützabschnitt eine rechteckförmige Halteplatte als Bestandteil des Arretiersockels vorgesehen ist, deren beiden Schmalseiten kleiner bemessen sind als die beiden Schmalseiten der Aufnahmeöffnung, dass an dem Boden ein biegeelastischer Stift angebracht oder angearbeitet ist, der parallel zu einer Außenwand des Stützabschnittes und beabstandet zu diesem verläuft, dass in jeder der Aufnahmeöffnungen eine oder zwei bogenförmig ausgestaltete Freisparung(en) eingearbeitet ist bzw. sind, die in einer bzw. jeweils einer der Langseiten der Aufnahmeöffnung und in deren mittigen Symmetrieachse verläuft bzw. verlaufen, und dass der Stift in einer Endstellung des Haltekörpers in eine der Freisparungen eingreift und in dieser freigesetzt oder verklemmt ist, ist eine zuverlässige und stabile Abstützung des Haltekörpers an dem Traggestell geschaffen, so dass insbesondere parallel zur Schwerkraftrichtung wirkende Eigengewichtskräfte der abzustützenden Gegenstände an dem Haltekörper und dem Traggestell aufgenommen werden können.

Der Boden und die Halteplatte liegen nämlich auf der Ober- und Unterseite des Traggestells an, wodurch die auftretenden Drehmomente unmittelbar über die derart erzeugten Anlageflächen in Form einer Hinterschneidung zwischen dem Boden bzw. der Halteplatte und dem Traggestell übertragen sind. Zudem verhindert der verklemmte Stift, der in die in die jeweilige Aufnahmeöffnung eingearbeitete Freisparung eingreift, dass der Haltekörper in Schwerkraftrichtung abrutscht, so dass gewährleistet ist, dass der Haltekörper sowohl verdrehsicher als auch in Schwerkraftrichtung in der jeweiligen Aufnahmeöffnung des Traggestells arretiert ist.

Da der Stützabschnitt in etwa einen Durchmesser aufweist, der der Länge der Schmalseite der rechteckförmigen Aufnahmeöffnung entspricht, weist der Arretiersockel insgesamt eine hohe Formstabilität auf. Die auftretenden und ein drehmomenterzeugenden Eigengewichtskräfte der abzustützen Gegenstände können somit zuverlässig und dauerhaft über den Haltekörper an dem Traggestell abgestützt werden.

Da die Halteplatte eine rechteckförmige Außenkontur aufweist, die in etwa der Innenkontur der jeweiligen Aufnahmeöffnung entspricht, können die Halteplatte und der Stützabschnitt des Arretiersockels in die jeweilige Aufnahmeöffnung eingesteckt und in dieser um 90° verdreht sein. Eine solche Montage kann ohne Zeitverzögerung erfolgen. Durch den Stift wird demnach nicht nur eine Abstützung in Schwerkraftrichtung sondern vielmehr auch ein Anschlag geschaffen, so dass der jeweilige Haltekörper aus der eingesetzten Position in eine vorgegebene Entstellung bewegt werden kann.

In der Zeichnung ist ein erfindungsgemäßes Ausführungsbeispiel der Vorrichtung zur Halterung von Gegenständen dargestellt, das nachfolgend näher erläutert ist. Im Einzelnen zeigt:
- Figur 1: eine Vorrichtung bestehend aus einem Traggestell, das an einer Wand eines Raumes befestigt ist und das eine Vielzahl von rechteckförmigen Aufnahmeöffnungen aufweist, und aus mehreren Haltekörper, die über einen an diesem angeforderten Arretiersockel in der jeweiligen Aufnahmeöffnung des Traggestells eingesetzt und in dieser verdrehsicher und entgegen der Schwerkraftrichtung abgestützt sind, in Draufsicht,
- Figur 2a: einen der Haltekörper im eingesetzten Zustand in der jeweiligen Aufnahmeöffnung, im Schnitt,
- Figur 2b: den Haltekörper gemäß Figur 2a, von unten,
- Figur 3a: den Haltekörper gemäß Figur 2a, im eingesetzten Zustand,
- Figur 3b: den Haltekörper gemäß Figur 3a um 45° verdreht in einer Zwischenstellung und
- Figur 3c: den Haltekörper gemäß Figur 3a um 90° verdreht in seiner Endstellung.

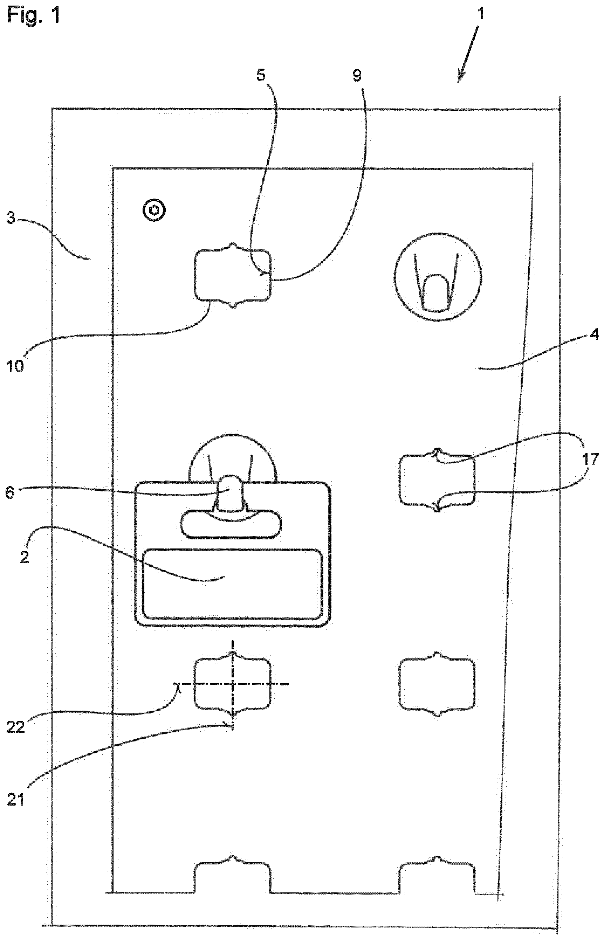

Aus Figur 1 ist eine Vorrichtung 1 zu entnehmen, die aus einem Traggestell 4 mit einer Vielzahl von in diesem eingearbeiteten rechteckförmigen Aufnahmeöffnungen 5 besteht, um Gegenstände 2 an einer Wand 3 zuverlässig und dauerhaft abzustützen. Solche Gegenstände 2 weisen eine hohe Eigengewichtskraft auf, die an der Wand 3 über einen in das Traggestell 4 eingesteckten Haltekörper 6 abzustützen sind. Die jeweiligen Aufnahmeöffnungen 5 weisen eine rechteckförmige Innenkontur auf. Dies bedeutet, dass zwei parallel zueinander verlaufende Seiten der Aufnahmeöffnungen 5 gleich lang sind und dass die jeweils senkrecht dazu ausgerichtete Seitenwand eine unterschiedlich bemessene Länge besitzt. Dies führt dazu, dass zwei der gegenüberliegenden Seiten als Schmalseiten 9 und die dazu senkrecht verlaufenden Seitenwände als Langseiten 10 gekennzeichnet sind.

In die Langseiten 10 sind im Bereich der mittigen Symmetrieachse 21 zwei Freisparrungen 17 eingearbeitet, die eine bogenförmige oder runde Innenkontur aufweisen.

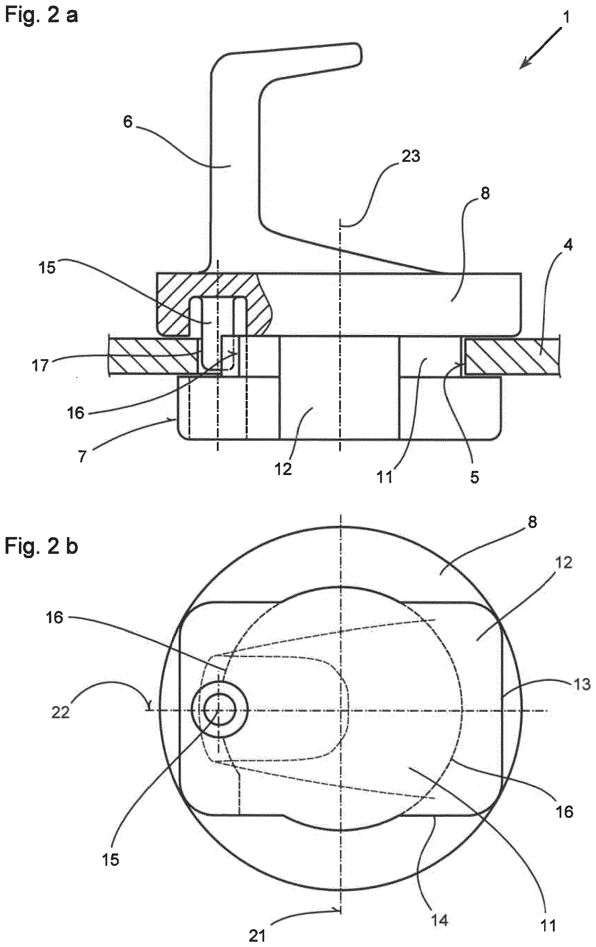

In Figur 2a ist der Endzustand des Haltekörpers 6 in der jeweiligen Aufnahmeöffnung 5 des Traggestells 4 abgebildet. Zur Arretierung des Haltekörpers 6 ist an diesem zunächst ein Boden 8 angeformt, der üblicherweise eine runde Außenkontur aufweist. Der Durchmesser des Bodens 8 ist dabei größer dimensioniert als die Länge der Langseite 10 der Aufnahmeöffnung 5, wodurch erreicht ist, dass der Boden 8 mit seiner Unterseite, also der dem Traggestell 4 zugewandten Oberfläche, auf dem Traggestell 4 aufliegt. An dem Boden 8 ist unmittelbar benachbart zu diesem ein Arretiersockel 7 angeformt, der aus einem runden Stützabschnitt 11 und einer unmittelbar zu diesem benachbart angeordneten rechteckförmigen Halteplatte 12 besteht. Der Durchmesser des Stützabschnittes 11 ist dabei etwas kleiner bemessen als die Länge der Schmalseite 9 der jeweiligen Aufnahmeöffnung.

Die Halteplatte 12 kann durch die Aufnahmeöffnung 5 hindurchgeführt werden und taucht in diese ein.

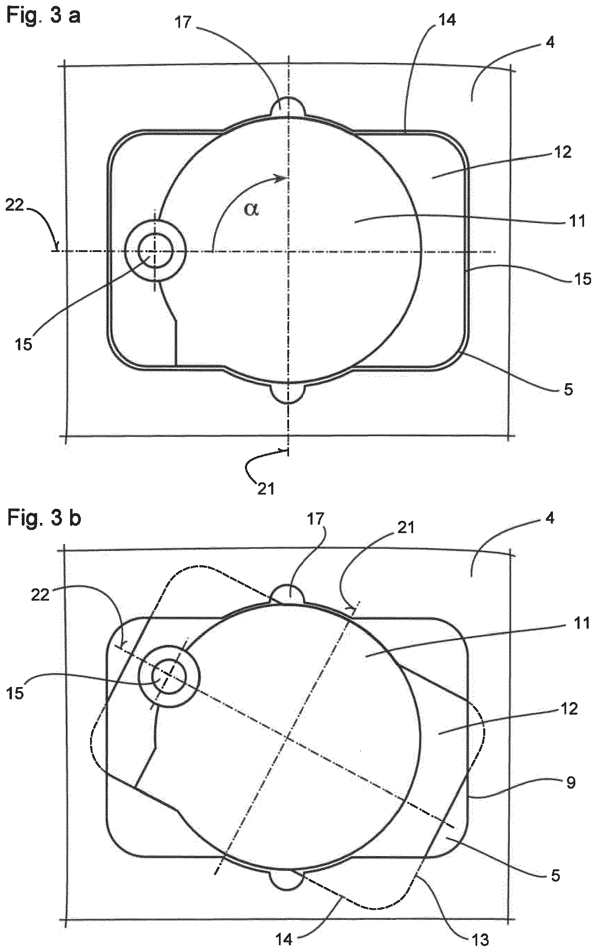

Darüber hinaus ist benachbart zu dem Stützabschnitt 11 ein Stift 15 an dem Boden 8 angeformt, der parallel zu der Außenseite 16 des Stützabschnittes 11 verläuft und in Richtung der Halteplatte 12 von dem Boden 8 absteht. Der Stift 15 ist elastisch verformbar. Wenn demnach der Haltekörper 6 in der Aufnahmeöffnung 5 verdreht ist, liegt der Stift 15 gemäß Figur 2b an der Innenseite der Langseite 10 an, und zwar unmittelbar vor der Freisparung 17. Demnach kann der Haltekörper 6, nachdem dieser in die jeweilige Aufnahmeöffnung 5 eingesetzt ist, im oder entgegen des Uhrzeigersinns verdreht werden. Diese eingestellte Position des Haltekörpers 5 ist in Figur 3a abgebildet.

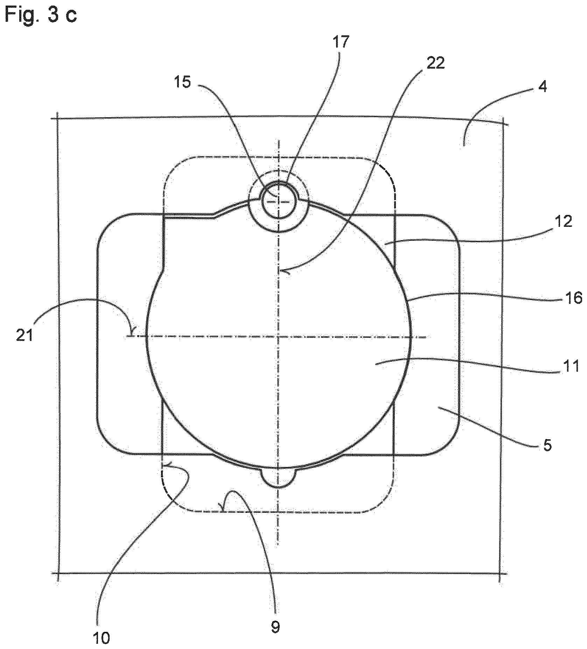

Aus dieser eingesetzten Position des Haltekörpers 6 wird dieser in Richtung einer der beiden Freisparungen 17 gemäß Figur 3b verdreht. Sobald der Stift 15 an der Langseite 10 der jeweiligen Aufnahmeöffnung 5 anschlägt, entsteht eine Widerstandskraft, durch die der elastisch verformbare Stift 15 gemäß Figur 3c in Richtung des Stützabschnittes 11 verbogen ist. Durch Weiterdrehen des Haltekörpers 6 in Richtung der jeweiligen Freisperrung 17 taucht der Stift 15 in diese ein und schnappt in seine Ausgangsposition zurück. Folglich ist der Stift 15 in der Freisparung 17 verklemmt und demnach festgesetzt. Dies bewirkt, dass der Haltekörper 6 in Schwerkraftrichtung in der jeweiligen Aufnahmeöffnung 4 lageorientiert gehalten ist. Erst wenn erneut der Haltekörper 6 verdreht wird, wird der Stift 15 aus der Freisparung 17 herausgedrückt und sobald die Halteplatte 12 derart ausgerichtet ist, dass deren Außenseiten fluchtend zu den Innenseiten der Aufnahmeöffnung 4 verlaufen, kann der Haltekörper 6 aus der jeweiligen Aufnahmeöffnung 5 herausgezogen werden.

Da der Durchmesser des Stützabschnittes 11 kleiner bemessen ist als die Länge der Schmalseite der jeweiligen Aufnahmeöffnung 5, liegt der Stützabschnitt 11 lediglich an der Langseite 10 der Aufnahmeöffnung 5 an, sobald der Haltekörper 6 in seiner Endstellung verdreht und eingeklemmt ist.

Der Boden 8, der Stützabschnitt 11 sowie die Halteplatte 12 sind in ihrem Gesamtquerschnitt U-förmig ausgestaltet, so dass der Boden 8 und die Halteplatte 12 das Traggestell 4 in eingesetztem Zustand des Haltekörpers 6 teilweise umgreifen und damit eine Hinterschneidung bilden, um den Haltekörper 6 an dem Traggestellt 4 abzustützen. Die Höhe des Stützabschnittes 11 entspricht in etwa der Wandstärke des Traggestells 4.

Der Haltekörper 6 kann folglich lediglich um einen vorgegebenen Winkel α von exakt 90° um eine senkrecht zu der Aufnahmeöffnung 5 verlaufende Symmetrieachse 23 verdreht werden, und zwar so lange, bis der Stift 15 in die Freisparung 17 einrastet.

## Patentansprüche

1. Vorrichtung (1) zur Halterung von Gegenständen (2) bestehend aus:
- einem plattenförmigen Traggestell (4), in dem eine Vielzahl von rechteckförmigen Aufnahmeöffnungen (5) eingearbeitet sind,
- einem Haltekörper (6), an dem ein Arretiersockel (7) angeformt ist, der in eine der Aufnahmeöffnungen (5) einsteckbar und in dieser bereichsweise verdrehbar ist,
- und aus einem zwischen dem Haltekörper (6) und dem Arretiersockel (7) angeordneten Boden (8), dessen Breite oder Durchmesser größer bemessen ist als die Breite der beiden Schmalseiten (9) der jeweiligen Aufnahmeöffnung (5), **dadurch gekennzeichnet,**
**dass** unmittelbar benachbart zu dem Boden (8) ein kreisförmiger Stützabschnitt (11) als Bestandteil des Arretiersockels (7) vorgesehen ist, der im montierten Zustand des Haltekörpers (6) an dem Traggestell (4) an zwei gegenüberliegenden Langseiten (10) der Aufnahmeöffnung (5) anliegt,
**dass** unmittelbar benachbart zu dem Stützabschnitt (11) eine rechteckförmige Halteplatte (12) als Bestandteil des Arretiersockels (7) vorgesehen ist, deren beiden Schmalseiten (13) kleiner bemessen sind als die beiden Schmalseiten (9) der Aufnahmeöffnung (5),
**dass** an dem Boden (8) ein biegeelastischer Stift (15) angebracht oder angearbeitet ist, der parallel zu einer Außenwand (16) des Stützabschnittes (11) und beabstandet zu diesem verläuft,
**dass** in jeder der Aufnahmeöffnungen (5) eine oder zwei bogenförmig ausgestaltete Freisparung(en) (17) eingearbeitet ist bzw. sind, die in einer bzw. jeweils einer der Langseiten (10) der Aufnahmeöffnung (5) und in deren mittigen Symmetrieachse (21) verläuft bzw. verlaufen, und dass der Stift (15) in einer Endstellung des Haltekörpers (6) in eine der Freisparungen (17) eingreift und in dieser freigesetzt oder verklemmt ist.

2. Vorrichtung nach Anspruch 1,
**dadurch gekennzeichnet,**
**dass** die Höhe des Stützabschnittes (11) etwa der Wandstärke des Traggestelles (4) entspricht und dass der Boden (8) und die Halteplatte (12) das Traggestell (4) im eingesetzten Zustand bereichsweise nach Art einer Hinterschneidung überlappen.

3. Vorrichtung nach Anspruch 1 oder 2,
**dadurch gekennzeichnet,**
**dass** der Radius (r) des Stützabschnittes (11) gleich oder geringfügig kleiner bemessen ist als die halbe Breite der jeweiligen Schmalseite (9) der Aufnahmeöffnung (5).

## Claims

1. A device (1) for mounting objects (2), consisting of:
- a plate-shaped carrier frame (4) in which a plurality of rectangular accommodation openings (5) are worked,
- a holding body (6) on which a locking pedestal (7) is formed, which can be inserted in one of the accommodation openings (5) and can be rotated there within areas,
- and of a base (8) arranged between the holding body (6) and the locking pedestal (7), the width or diameter of which base (8) is larger than the width o the two narrow sides (9) of the particular accommodation opening (5),
**characterised in that,**
immediately adjacent to the base (8), a circular support section (11) is provided as a component of the locking pedestal (7) which, in the condition when the holding body (6) is mounted on the support frame (4), makes contact with two opposite long sides (10) of the accommodation opening (5),
that immediately adjacent to the support section (11), a rectangular holding plate (12) is provided as a component of the locking pedestal (7), the two narrow sides (13) of which are smaller than the two narrow sides (9) of the accommodation opening (5),
that a flexibly elastic pin (16) is attached to or worked onto the base (8) and runs parallel to an outer wall (16) of the support section (11) at a distance from that support section (11),
that one or two curving recess(es) (17) is/are worked into each of the accommodation openings (5), with the recess(es) (17) running in one or one each of the long sides (10) of the accommodation opening (5) and in their central axis of symmetry (21),
and that the pin (15) engages in one of the recesses (17) in an end position of the holding body (6) and is released or clamped therein.

2. The device in accordance with Claim 1,
**characterised in that,**
the height of the support section (11) approximates to the wall thickness of the carrier frame (4), and that the base (8) and the holding plate (12) overlap the carrier frame (4) in the inserted condition within areas in the manner of an undercut.

3. The device in accordance with Claim 1 or 2,
**characterised in that,**
the radius (r) of the support section (11) is equal to or slightly smaller than half the width of the corresponding narrow side (9) of the accommodation opening (5).

## Revendications

1. Dispositif (1) servant au support d'objets (2), comprenant :
- un cadre porteur (4), dans lequel il est pratiqué une multitude d'ouvertures de réception rectangulaires (5),
- un corps de retenue (6) sur lequel il est formé un socle de positionnement (7) qui se laisse insérer et tourner dans certaines limites dans une des ouvertures de réception (5), et
- un fond (8) disposé entre le corps de retenue (6) et le socle de positionnement (7), dont la largeur et le diamètre sont plus grands que la largeur des deux côtés étroits (9) de l'ouverture de réception respective (5),
**caractérisé en ce**
**que** directement avoisinant le fond (8), il est prévu une section d'appui circulaire (11) intégrée dans le socle de positionnement (7) qui, le corps de retenue (6) une fois monté sur le cadre porteur (4), porte sur deux faces longues opposées (10) de l'ouverture de réception (5),
**que** directement avoisinant la section d'appui circulaire (11), il est prévu une plaque de retenue rectangulaire (12) intégrée dans le socle de positionnement (7), dont les deux côtés étroits (13) sont plus petits que les deux côtés étroits (9) de l'ouverture de réception (5),
**que** sur le fond (8), il est monté ou pratiqué un goujon élastique (15) s'étendant parallèlement à la paroi extérieure (16) de la section d'appui circulaire (11) et qui est espacé de celle-ci,
**que** dans chacune des ouvertures de réception (5), il est pratiqué un ou deux évidements arqués (17) s'étendant dans un ou dans respectivement un des côtés longs (10) de l'ouverture de réception (5) et dans son axe de symétrie (21) et
**que** dans une position finale du corps de retenue (6), le goujon (15) s'engrène dans un des évidements (17) où il est libéré ou coincé.

2. Dispositif d'après la revendication 1,
**caractérisé en ce que**
la hauteur de la section d'appui (11) correspond à peu près à l'épaisseur du cadre porteur (4) et que, en état monté, le fond (8) et la plaque de retenue (12) recouvrent en partie le cadre porteur (4) à la façon d'une contredépouille.

3. Dispositif d'après la revendication 1 ou 2,
**caractérisé en ce que**
le rayon (r) de la section d'appui (11) est identique ou un peu plus petit que la demi-largeur du côté étroit respectif (9) de l'ouverture de réception (5)
